# EUROPEAN PATENT APPLICATION

(11) **EP 2 479 906 A1**
(43) Date of publication of application: **25.07.2012**
(21) Application number: 11290035.2
(22) Date of filing: 21.01.2011
(51) Int. Cl.: H04B 10/08, H04J 14/02

(54) **Method for operating an optical transmission line, optical transmission system, optical transmitter and optical receiver**

(71) Applicant: Alcatel Lucent, 75007 Paris (FR)
(72) Inventor: Pöhlmann, Wolfgang, 71282 Hemmingen (DE); Smith, Joseph Lee, Fuquay-varine NC North Carolina 27526 (US)
(74) Representative: Mildner, Volker

(57) **Abstract**

The invention relates to a method for operating an optical transmission line with several optical transmission channels for communication of several optical transmitters with several optical receivers using different wavelengths, where to each optical receiver an optical transmission channel is assigned, wherein to each transmission channel a set of different wavelengths is assigned, wherein each wavelength is assigned to one set of different wavelength only, wherein the wavelengths of each set of wavelengths are spread over an area of wavelength commonly permitted to all sets of wavelengths, wherein to each optical receiver is assigned a set of optical filters that pass the wavelengths of one set of wavelengths, and wherein each optical transmitter chooses a wavelengths from the set of wavelengths assigned to it that is usable for it with small effort, where assigning a set of wavelengths; choosing one wavelength out ot the assigned set of wavelengths or fine tuning the chosen wavelength is performed in protocolar interaction between either of the optical transmitters terminating the involved transmission channel and the optical receiver terminating the involved transmission channel as well as to an optical transmission system, an optical transmitter and an optical receiver.

## Description

### Field of the Invention

The invention relates to a method for operating an optical transmission line with several optical transmission channels for communication of several optical transmitters with several optical receivers using different wavelengths, where to each optical receiver an optical transmission channel is assigned, wherein to each transmission channel a set of different wavelengths is assigned, wherein each wavelength is assigned to one set of different wavelength only, wherein the wavelengths of each set of wavelengths are spread over an area of wavelength commonly permitted to all sets of wavelengths, wherein to each optical receiver is assigned a set of optical filters that pass the wavelengths of one set of wavelengths, and wherein each optical transmitter chooses a wavelength from the set of wavelengths assigned to it that is usable for it with small effort.

The invention further relates to an optical transmission system with an optical transmission line with several optical transmission channels, with several optical transmitters and with several optical receivers, where to each optical receiver a set of optical filters is assigned, wherein each filter passes one wavelength out of a set of different wavelengths, wherein each set of optical filters includes filters for other wavelength than the other sets of optical filters, wherein the sets of optical filters are arranged such that the wavelengths of each set of wavelengths are spread over an area of wavelengths commonly permitted to all sets of wavelengths, and wherein a concerned optical transmitter is built such that it chooses a wavelength from the set of wavelengths assigned to it that is usable for it with small effort.

The invention still further relates to an optical transmitter for an optical transmission system with an optical transmission line with several optical transmission channels, with several optical transmitters and with several optical receivers, where to each optical receiver a set of Optical filters is assigned, wherein each filter passes one wavelength out of a set of different wavelengths, wherein each set of optical filters includes filters for other wavelength than the other sets of optical filters, wherein the sets of optical filters are arranged such that the wavelengths of each .set of wavelengths are spread over an area of wavelengths commonly permitted to all sets of wavelengths, and wherein a concerned optical transmitter is built such that it chooses a wavelength from the set of wavelengths assigned to it that is usable for it with small effort.

The invention still further relates to an optical receiver for an optical transmission system with an optical transmission line with several optical transmission channels, with several optical transmitters and with several optical receivers, where to each optical receiver a set of optical filters is assigned, wherein each filter passes one wavelength out of a set of different wavelengths, wherein each set of optical filters includes filters for other wavelength than the other sets of optical filters, wherein the sets of optical filters are arranged such that the wavelengths of each set of wavelengths are spread over an area of wavelengths commonly permitted to all sets of wavelengths, and wherein a concerned optical transmitter is built such that it chooses a wavelength from the set of wavelengths assigned to it that is usable for it with small effort.

Such method, system, transmitter, and receiver already have been described in the non-pre-published European patent application 10165739.0, filing date June 11, 2010 (internal docket: 807254).

### Background

The problem dealt with here arose in the field of passive optical networks, PONs. Similar problems could arise in other fields of telecommunication, where a common optical transmitssion line with several transmission channels is used for communication of several optical transmitters with several optical receivers using different wavelengths, where to each optical receiver an optical transmission channel is assigned.

The solution found here could be used in such similar fields, too. Problem and solution will be described mainly with respect to passive optical networks.

Passive optical networks, or PONS, are being used in the access area of telecommunications' networks for connecting up to some hundreds of subscribers via optical transmission lines to an operator's central office. Such network normally is tree-shaped with the trunk connecting to the central office and the branches connecting to the subscribers.

Instead of several single subscribers also equivalent of respective higher traffic equipment may be connected.

Despite of being called "passive" such network also may contain active elements like regenerators or repeaters. Those elements than may act as optical transmitters or optical receivers in the sense of this invention.

We consider here mainly the upstream traffic from the subscribers to the central office, but in the opposite direction the principle of the invention could be applied as well.

At least between the central office and the first branching point there is the whole traffic present on one and the same part of an optical transmission line.

We assume to have a wavelength division multiplex system with several transmission channels on the same transmission line. The channels are foreseen for using different wavelengths. Depending on the actual traffic from one up to the maximum of channels will be in operation. Each channel may carry a time division multiplex of traffic from or for the different subscribers or equivalent equipment.

Each optical transmitter for operating in a wavelength division multiplex mode does not only consume power for outputting optical light while transmitting, but also needs to be empowered to reach and hold its operating wavelength. The latter is necessary not only while actually transmitting, but during the whole time while being ready for operation. So the power needed for holding the operating parameters may by far exceed the power for emitting light. In times of green technology this is a major drawback.

To cope with such drawback it is allowed to operate each wavelength channel with one of a whole set of wavelengths assigned to the same channel, but being distributed over the whole area of allowed or usable wavelengths. Then each optical transmitter may choose either of such assigned wavelengths taking into account the energy effort it needs to reach and hold its operating wavelength. Sets of optical filters then are used to filter out all wavelengths assigned to one and the same channel and to feed them to the respective optical receiver.

Practically this means that the optical transmitters in principle are allowed to operate with floating wavelengths depending on their temperature. But in floating they have to skip wavelengths for the other ones. So the use of conventional DFB lasers (DFB - Distributed FeedBack) instead of DWDM lasers

(DWDM = Dense Wavelength Division Multiplex) or CWDM lasers (CWDM = Course Wavelength Division Multiplex) as a low-cost solution is possible. In addition such solution needs only little energy to reach and hold the assigned wavelengths.

It should be clear that the term "wavelength" here, as often, is used meaning a small band-of wavelengths around a center wavelength.

Though automatic tuning following certain rules and automatic tracking of tuned properties is no principle problem, in telecommunications' systems like the above it is required to observe some rules in order to ensure trouble-free operation.

### Summary

This problem according to the invention is solved by a method for operating an optical transmission line with several optical transmission channels for communication of several optical transmitters with several optical receivers using different wavelengths, where to each optical receiver an optical transmission channel is assigned, wherein to each transmission channel a set of different wavelengths is assigned, wherein each wavelength is assigned to one set of different wavelength only, wherein the wavelengths of each set of wavelengths are spread over an area of wavelength commonly permitted to all sets of wavelengths, wherein to each optical receiver is assigned a set of optical filters that pass the wavelengths of one set of wavelengths, and wherein each optical transmitter chooses a wavelength from the set of wavelengths assigned to it that is usable for it with small effort, where assigning a set of wavelengths, choosing one wavelength out of the assigned set of wavelengths or fine tuning the chosen wavelength is performed in protocolar interaction between, either of the optical transmitters terminating the involved transmission channel and the op tical receiver terminating the involved transmission channel.

This problem according to the invention further is solved by an optical transmission system with an optical transmission line with several optical transmission channels, with several optical transmitters and with several optical receivers, where to each optical receiver a set of optical filters is assigned, wherein each filter passes one wavelength out of a set of different wavelengths, wherein each set of optical filters includes filters for other wavelength than the other sets of optical filters, wherein the sets of optical filters are arranged such that the wavelengths of each set of wavelengths are spread over an area of wavelengths commonly permitted to all sets of wavelengths, and wherein a concerned optical transmitter is built such that it chooses a wavelength from the set of wavelengths assigned to it that is usable for it with small effort, where a concerned optical transmitter and an optical receiver being in connection with said optical transmitter via an optical transmission channel further are built such that assigning a set of wavelengths, choosing a wavelength out of the assigned set of wavelengths or fine tuning of the chosen wavelength is performed in protocolar interaction between either of the optical transmitters terminating the involved transmission channel and the optical receiver terminating the involved transmission channel.

This problem according to the invention still further is solved by an optical transmitter for an optical transmission system with an optical transmission line with several optical transmission channels, with several optical transmitters and with several optical receivers, where to each optical receiver a set of optical filters is assigned, wherein each filter passes one wavelength out of a set of different wavelengths, wherein each set of optical filters includes filters for other wavelength than the other sets of optical filters, wherein the sets of optical filters are arranged such that the wavelengths of each set of wavelengths are spread over an area of wavelengths commonly permitted to all sets of wavelengths, and wherein a concerned optical transmitter is built such that it chooses a wavelength from the set of wavelengths assigned to it that is usable for it with small effort, where a concerned optical transmitter and an optical receiver being in connection with said optical transmitter via an optical transmission channel further are built such that assigning a set of wavelengths, choosing a wavelength out of the assigned set of wavelengths or fine tuning of the chosen wavelength is performed in protocolar interaction between either of the optical transmitters terminating the involved transmission channel and the optical receiver terminating the involved transmission channel.

This problem according to the invention, still further is solved by an optical receiver for an optical transmission system with an optical transmission line with several optical transmission channels, with several optical transmitter and with several optical receivers, where to each optical receiver a set of optical filters is assigned, wherein each filter passes one wavelength out of a set of different wavelengths, wherein each set of optical filters includes filters for other wavelength than the other sets of optical filters, wherein the sets of optical filters are arranged such that the wavelengths of each set of wavelengths are spread over an area of wavelengths commonly permitted to all sets of wavelengths, and wherein a concerned optical transmitter is built such that it chooses a wavelength from the set of wavelengths assigned to it that is usable for it with small effort, where a concerned optical transmitter and an optical receiver being in connection with said optical transmitter via an optical transmission channel further are built such that assigning a set of wavelengths, choosing a wavelength out of the assigned set of wavelengths or fine tuning of the chosen wavelength is performed in protocolar interaction between either of the optical transmitters terminating the involved transmission channel and the optical receiver terminating the involved transmission channel.

In telecommunications' systems anyway protocols are used to ensure proper operation of a whole system. Such protocols need little adaptation to also cope with this problem.

Further embodiments of the invention are to be found in the subclaims and in the accompanying description.

### Brief Description of the Figures

In the following the invention now will be described by way of example with the aid of the accompanying drawings, in which:
- Figure 1: shows an optical transmission system according to the invention, wherein a method for operating an optical transmission line according to the invention can be performed, optical transmitters according to the invention, and optical receivers according to the invention.
- Figure 2: shows an optical filter device that may be used in an optical transmission system according to the invention.
- Figure 3: shows optical spectra assignment in an optical transmission system according to the invention.

### Description of the Embodiments

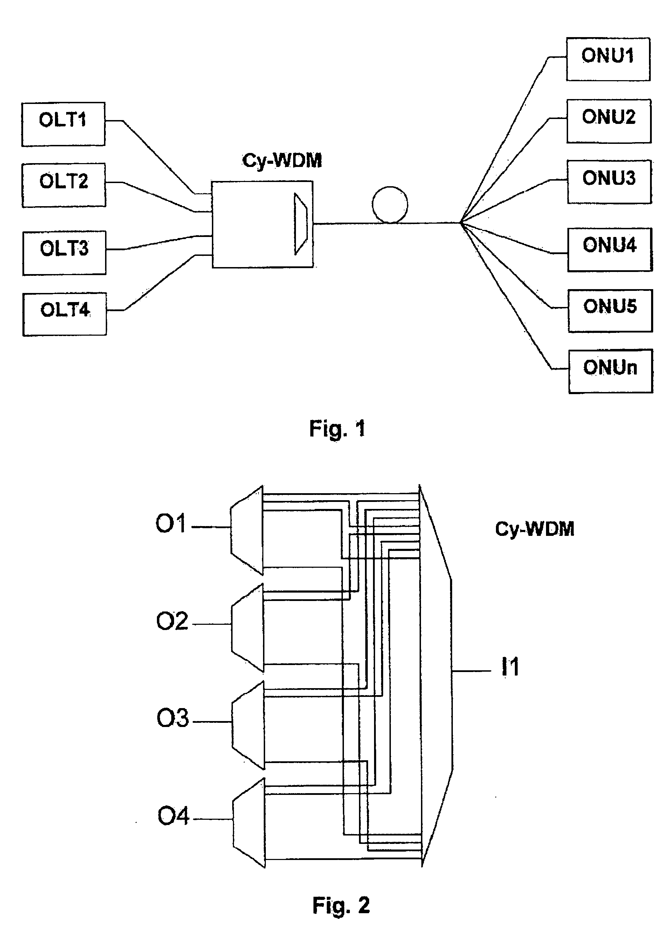

The optical transmission system shown in figure 1 shows a passive optical network in the access area of a telecommunications' area. On the left there is shown equipment belonging to a central office of an operator, namely four optical line termination units OLT1, OLT2, OLT3, and OLT4, and a cyclic wavelength division multiplexer Cy-WDM. On the right there is shown equipment belonging to the subscribers' premises, namely six out of a greater number of optical network units ONU1, ..., ONU5 , and ONUn.

Of the four optical line termination units OLT1, OLT2, ULT3, and OLT4 here we consider the receive parts. We assume that the number of four such units shows the complete network installation. But from up to two such units measures like those recommended by this invention are demanded; of course with only one such unit such measures are not hindering. In addition, independent from the number of installed such units the number of units in operation may reach from one to the maximum, here four. There is no difference between known such units and those suitable for the invention. They are assumed to have optical inputs that are equally sensitive to all wavelengths within a given operating range.

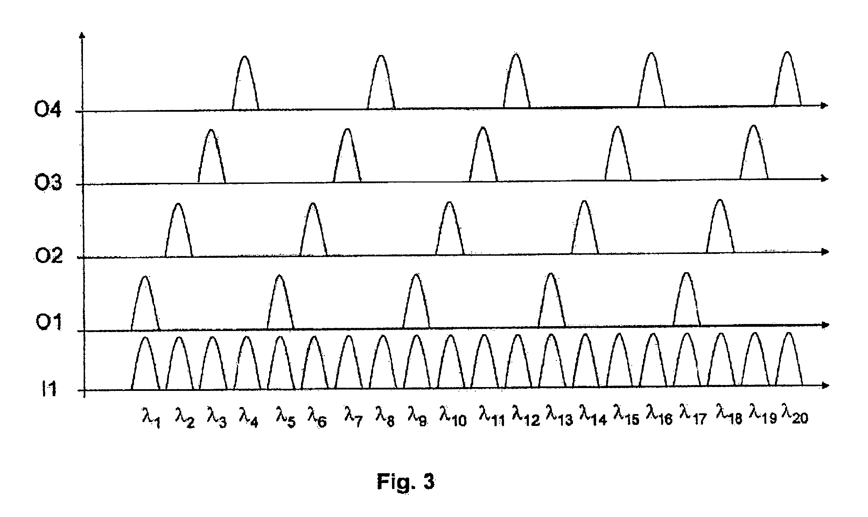

The cyclic wavelength division multiplexer Cy-WDM is a key element for understanding this invention and will be described separately with the aid of figures 2 and 3.

Of the optical network units like ONU1, ..., ONU5, and ONUn here we consider the transmit parts. As already mentioned they may be equipped with conventional DFB lasers and may float with temperature, but in their floating have to skip wavelengths for the other ones.

Figure 2 shows an optical filter device Cy-WDM. In this example this filter device is adapted to four transmission channels being output at four outputs 01, 02, 03, and 04, each belonging to one of four optical receivers.

At the right there is an input I1 connected to an input of an optical wavelength demultiplexer. This demultiplexer filters out each of the allowed wavelengths separately. All of these allowed wavelengths are separated into four sets of wavelengths with each wavelength belonging to one set of wavelengths and the wavelengths of each set of wavelengths being spread over the whole foreseen area of wave-lengths.

In practice the wavelengths are cyclically assigned to the four transmission channels, meaning that all wavelengths belonging to one channel are equally spaced from one another.

The outputs of this wavelength demultiplexer now are cyclically connected to the inputs of four combining units shown at the left of figure 2. Principally these combining units are optical couplers. But depending on the technology used such couplers may have high losses. In practice therefore the use of optical filter devices with a 1XN or here 1X4 matrix may be preferred as such optical combining units.

In practice the whole optical filter device Cy-WDM shown in figure 2 may be realized in one single component based on the principles of the already mentioned well-known arrayed waveguide gratings AWG. Such component in fact has (in both directions!) an insertion loss lower than that of a splitter.

The latter fact allows the replacement of the element at the branching point of figure 1, normally a splitter, with an optical filter device Cy-WDM as described here. The freedom of freely changing the assignment between the optical network units like ONU1, ..., ONU5, and ONUn thus would be exchanged against a lower insertion loss.

This is shown in terms of wavelengths in figure 3. This example shows 20 wavelengths (or wavelength bands) from lambdal to lambda20 being input to the optical filter device at input I1. They are cyclically allotted to the four transmission channels being output at one each of the four outputs O1, O2, O3, and O4.

So each of the optical network units ONU1, ..., ONU5, and ONUn depending on the actual traffic situation is assigned to either of these four transmission channels being output on the respective one on outputs O1, O2, O3, and O4 of the optical filter device Cy-WDM. The transmit parts of these optical net work units ONU1, ..., ONU5, and ONUn are allowed to be low-cost conventional DFB lasers that are allowed to float with temperature. According to what is shown in figure 3 such floating is not really free, but such that a lock-in at either of the wavelengths assigned to the respective transmission channels is to be ensured. Such restriction is not really severe, because the shown number of 20 possible channels is only a simplification for better illustration. Actually it is expected to have up to some 50 allowed transmission channels. And even when the restriction in freedom were severe, it would be better than to have no freedom, at all.

As already mentioned above to cope with such floating wavelengths particular attention has to be paid. Though automatic tuning following certain rules and automatic tracking of tuned properties is no principle problem, in telecommunications' systems like the above it is required to observe some rules in order to ensure trouble-free operation.

As usual in telecommunications' systems we assume that all elements in such systems are in more or less continuous touch via respective protocols. Mostly we have bidirectional direct communications, but sometimes the communication between two cooperating elements may use independent ways in the two directions. For example in a point-to-multipoint communication in the point-to-multipoint direction (the downstream direction) protocolar messages may be sent using a channel common to all elements, while in the opposite direction (the upstream direction) each element may use its own channel for sending protocolar messages. There are also examples of completely different networks being used for the two directions.

Anyway, normally there is already a protocolar interaction between the co-operating optical transmitters and optical receivers or there is no principle problem to provide for the required equipment. In the following this is not further dealt with.

According to the invention the problems with the floating wavelengths are being coped with by using a protocolar interaction between the involved network elements. When the assigning of a set of wavelengths or the choosing of one wavelength out of the assigned set of wavelengths (both followed by the subsequent occupying of such wavelength), or a fine tuning of such wavelength is performed under control of the system, the influence of such action on both, the affected channel and all the others, can be kept as low as possible.

In the example used here, namely a passive optical network in the access area of a telecommunications' area, this means, that the central office of an operator, represented by four optical line termination units OLT1, OLT2, OLT3, and OLT4, centrally controls the Whole telecommunications' area.

In the following some examples shall further explain the invention:
A: Activation of a new optical network unit, like optical network unit ONU1:
   Here mainly an assignment of a wavelength set from one of the line termination units, here line termination unit OLT1, to the optical network unit ONU1 is to be performed.

The whole course of such activation may be included in an already existing protocol as follows:
1.) The new optical network unit ONU1 has passed an "initialstate 01" (power on settings), a "standby-state O2" (received downstream traffic), a "power-setup-state O3" (power settings) and is now in a "serial-number-state O4".
2.) When the optical network unit ONU1 receives a serial-number request from line termination unit OLT1, it sends out an upstream message with its serial number.
   3a.) If line termination unit OLT1 received the serial number of optical network unit ONU1, it assigns an ONU-ID. It also informs optical network unit ONU1 on which wavelength set it is currently received and assigns it to one out of "N" (N=4 in this example) wavelength sets and sends this information downstream to optical network unit ONU1. This approach uses an absolute value of the wavelengths to communicate back to optical network unit ONU1.
4.) If optical network unit ONU1 receives the ONU ID and desired wavelength set information, it continues with step (6).
5.) If optical network unit ONU1 does not receive the ONU-ID, it increases the laser temperature to achieve a 25 GHz offset (which equates to 1.7 degrees Kelvin in the O-band consideration of this example). Then optical network unit ONU1 proceeds to step (2).
6.) If optical network unit ONU1 is already on the correct wavelength set, then it maintains its current setting.
7.) If optical network unit ONU1 is not on the correct wavelength set, it tunes by 50, 100 or 150 GHz (3.4, 6.8 or 10.2K). Then optical network unit ONU1 goes to the ranging-state 05.
8.) The rest of the activation process (ranging ...) is not specific to this context and follows the normal process defined by the PON standard.
   Whereas in step 3a.) the set of wavelengths is specified by an absolute value, it could also be specified by at least one value being in relation to the wavelength used in the course of activation as shown in the following step 3b.):
   3b.) If line termination unit OLT1 received the serial number of optical network unit ONU1, it assigns an ONU-ID and Wavelength Offset and sends this information downstream.
      This approach uses a (relative) wavelength offset value to communicate back to optical network unit ONU1.
      The line termination unit OLT1 determines which wavelength group (WG) optical network unit ONU1s signal is received on.
      Using various algorithms, the line termination unit OLT1 determines which WG optical network unit ONU1 should be working on. The line termination unit OLT1 then sends a Wavelength Offset to optical network unit ONU1. This value may be positive or negative, but is normally intended to be a positive number since only heating is anticipated to be provided by this scheme. The only information optical network unit ONU1 needs to know is if it needs to move a wavelength "channel (offset of "0" to "N").
B: Activation of a new optical network unit, like optical network unit ONU2, when optical network unit ONU2 is in cooperation with an optical receiver that is tunable:
   1.) After initial state (power on settings, O1) optical network unit ONU2 waits to receive downstream message (O2).
   2.) If no downstream message is received within a certain time, the tunable receiver is retuned, then go to 02 (1) again.
   3.) If downstream message is received continue as in A above.
C: Wavelength stabilization a new optical network unit, like optical network unit ONU3:
   The optical network unit ONU3 is actively sending and receiving traffic in the PON. A wavelength stabilisation process (dithering) keeps the wavelength near the centre of the passband of the used filter.
      0.) Line termination unit OLT1 measures the received power by a fast RSSI (transceiver study group, RSSI strobe).
      1.) Line termination unit OLT1 requests optical network unit ONU3 to tune the upstream wavelength by a small shift, e.g. 5 GHz (O-band 0.34K) up initial setting.
      2.) Optical network unit ONU3 informs line termination unit OLT1 when the tuning is finished.
      3.) Line termination unit OLT1 measures the received power by a fast RSSI (transceiver study group, RSSI strobe)
      4) Line termination unit OLT1 requests optical network unit ONU3 to tune the upstream wavelength by 5 GHz (O-band 0.34K) down from its initial setting.
      5.) Optical network unit ONU3 informs line termination unit OLT1 when the tuning is finished.
      6.) Line termination unit OLT1 measures the received power by a fast RSSI.
      7.) Line termination unit OLT1 determines which wavelength (+5 GHz, 0, -5 GII2) gives the most receiver power and advises optical network unit ONU3 to tune to this frequency.
D: Procedure of wavelength hop in the same wavelengths set for an optical network unit, like optical network unit ONU4:
   When the temperature of the laser of optical network unit ONU4 heats up, the heater current is reduced that is used to stabilize the laser temperature and therefore the wavelength. When the point is reached that cooling would be required to maintain the existing wavelength, then in a heater only system a hop of the wavelength by 200 GHz to the next wavelength set is needed to be able to stabilize the wavelength again.
      1.) Optical network unit ONU4 determines that heater current is reaching zero and that it needs a wavelength hop to the next wavelength band in the next wavelength set and sends a request to line termination unit OLT1.
      2.) Line termination unit OLT1 informs optical networks unit ONU4 when it can start the tuning. Line termination unit OLT1 can stop traffic on PON during time of tuning.
      3.) After end of this tuning process, optical network unit ONU4 informs line termination unit OLT1 and normal operation resumes.

Once understood the principles and examples given in terms of a method it is clear to the person skilled in the art, how to adapt the used devices, especially optical receivers and optical transmitters.

## Claims

1. Method for operating an optical transmission line with several optical transmission channels for communication of several optical transmitters with several optical receivers using different wavelengths, where to each optical receiver an optical transmission channel is assigned, wherein to each transmission channel a set of different wavelengths is assigned, wherein each wavelength is assigned to one set of different wavelength only, wherein the wavelengths of each set of wavelengths are spread over an area of wavelength commonly permitted to all sets of wavelengths, wherein to each optical receiver is assigned a set of optical filters that pass the wavelengths of one set of wavelengths, and wherein each optical transmitter chooses a wavelength from the set of wavelengths assigned to it that is usable for it with small effort, where assigning a set of wavelengths, choosing one wavelength out of the assigned set of wavelengths or fine tuning the chosen wavelength is performed in protocolar interaction between either of the optical transmitters terminating the involved transmission channel and the optical receiver terminating the involved transmission channel.

2. Method according to claim 1, wherein for performing the protocolar interaction on the side of the optical transceiver in cooperation with this an optical receiver is used and on the side of the optical receiver in cooperation with this an optical transmitter is used.

3. Method according to claim 1, wherein for performing the protocolar interaction a transmission channel is used that is dedicated to this purpose.

4. Method according to claim 1, wherein in the course of activating an optical transmitter with an optical receiver the latter assigns a set of wavelengths that than is used by the optical transmitter.

5. Method according to claim 4, wherein the set of wavelengths is specified by at least one absolute value.

6. Method according to claim 4, wherein the set of wavelengths is specified by at least one value being in relation to the wavelength used in the course of activation.

7. Method according to claim 2, wherein in case the optical receiver cooperating with the optical transmitter is tunable the tuning of the optical receiver is performed stepwise in time and in wavelength, until reception for performing the protocolar interaction is possible.

8. Method according to claim 1, wherein a fine tuning of the used wavelength is performed in that the involved optical receiver measures the strength of the received optical signal, advices the optical transmitter by protocol to slightly detune the wavelength first to one direction and than to the other direction, measures in both cases the strength of the than received signal, and than decides whether further on either of the both detuned wavelengths is to be used.

9. Method according to claim 1 for changing the wavelength within the assigned set of wavelengths, wherein a change of wavelength is performed when a further required detuning of the transceiver is no longer possible or only under undesired conditions.

10. Method according to claim 1, wherein the time for changing is chosen in protocolar interaction.

11. Optical transmission system with an optical transmission line with several optical transmission channels, with several optical transmitters and with several optical receivers, where to each optical receiver a set of optical filters is assigned, wherein each filter passes one wavelength out of a set of different wavelengths, wherein each set of optical filters includes filters for other wavelength than the other sets of optical filters, wherein the sets of optical filters are arranged such that the wavelengths of each set of wavelengths are spread over an area of wavelengths commonly permitted to all sets of wavelengths, and wherein a concerned optical transmitter is built such that it chooses a wavelength from the set of wavelengths assigned to it that is usable for it with small effort, where a concerned optical transmitter and an optical receiver being in connection with said optical transmitter via an optical transmission channel further are built such that assigning a set of wavelengths, choosing a wavelength out of the assigned set of wavelengths or fine tuning of the chosen wavelength is performed in protocolar interaction between either of the optical transmitters terminating the involved transmission channel and the optical receiver terminating the involved transmission channel.

12. Optical transmitter for an optical transmission system according to claim 11.

13. Optical receiver for an optical transmission system according to claim 11.
